(19) Europäisches Patentamt
European Patent Office
Office européen des brevets

(11) Veröffentlichungsnummer: **0 153 672**
**B1**

(12) **EUROPÄISCHE PATENTSCHRIFT**

(45) Veröffentlichungstag der Patentschrift: **03.05.89**

(51) Int. Cl.⁴: **B 01 J 19/06**, C 08 G 85/00

(21) Anmeldenummer: **85101674.1**

(22) Anmeldetag: **15.02.85**

(54) **Vorrichtung zur Überführung einer flüssigen in eine feste Phase.**

(30) Priorität: **21.02.84 DE 3406178**

(43) Veröffentlichungstag der Anmeldung: **04.09.85 Patentblatt 85/36**

(45) Bekanntmachung des Hinweises auf die Patenterteilung: **03.05.89 Patentblatt 89/18**

(84) Benannte Vertragsstaaten: **BE CH DE FR GB LI NL**

(56) Entgegenhaltungen:
**DE-C- 659 469**
**US-A- 4 283 517**

(73) Patentinhaber: **CASSELLA Aktiengesellschaft, Hanauer Landstrasse 526, D-6000 Frankfurt am Main 61 (DE)**

(72) Erfinder: **Schmitz, Hermann, Dr., Marbachweg 313, D-6000 Frankfurt 1 (DE)**
Erfinder: **Sandrock, Gerd, Donaustrasse 24, D-6460 Gelnhausen (DE)**
Erfinder: **Lüke, Johannes, Lersnerstrasse 31, D-6000 Frankfurt 1 (DE)**
Erfinder: **vom Baur, Hans, Robert-Dissmann-Strasse 6, D-6230 Frankfurt 80 (DE)**

(74) Vertreter: **Urbach, Hans-Georg, Dr. et al, Hanauer Landstrasse 526, D-6000 Frankfurt am Main 61 (DE)**

EP 0 153 672 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Bei manchen Polymerisations- oder Copolymerisationsverfahren entstehen Homo- oder Copolymerisate in Form von halbfesten Produkten oder in Form von Gelen oder formstabilen Gallerten. Derartige Gele oder formstabile Gallerten werden z.B. bei der Polymerisation oder Copolymerisation von Acryl- oder Methacrylsäure oder deren Salzen, von Acrylamid und davon abgeleiteten Derivaten, wie z.B. 2-Acrylamido-2-methylpropansulfonsäure, Vinylamiden, wie z.B. Vinylacetamid, Vinylformamid, Vinylsulfonsäure, Vinylphosphonsäuren, gegebenenfalls in Anwesenheit weiterer copolymerisierbarer Substanzen gebildet. Die Polymerisation oder Copolymerisation kann dabei in Lösung oder Dispersion, z.B. in Wasser, durchgeführt werden.

Um dabei möglichst hochmolekulare Produkte zu erhalten, wird die Polymerisation oder Copolymerisation häufig ohne Umwälzung oder Rühren unter Ausnutzung des Trommsdorff-Norrish-Effektes durchgeführt. Oft ist auch der Ausschluss von Sauerstoff erforderlich. Polymerisate in Form von Gelen oder formstabilen Gallerten sind häufig klebrig und haften an der Oberfläche zahlreicher Werkstoffe. Die Durchführung derartiger Polymerisationen in grösserem Massstab bereitet daher apparative Schwierigkeiten.

Aus der Deutschen Reichspatentschrift 659469 ist ein Verfahren und eine Vorrichtung zur Herstellung blasenfreier Formgebilde, wie Scheiben oder Platten, durch Polymerisation von Vinylverbindungen oder Acrylverbindungen bekannt. Dabei wird die Polymerisation in zweckmässig stehend angeordneten und beiderseits heiz- und kühlbaren Flachkammern bei erhöhten Temperaturen in dünnen, zu örtlichen Überhitzungen keine Veranlassung gebenden Schichten durchgeführt und die gebildeten Scheiben oder Platten nach der Beendigung des Polymerisationsvorgangs aus der Form entnommen. Bei der zur Durchführung dieses Verfahrens angegebenen Vorrichtung wird eine reihenförmige Anordnung von stehenden Polymerisationskammern in einer Art Spindelpresse zusammengefasst. Die Polymerisationskammern sind dabei durch Rahmen gebildet, die zwischen je zwei, von einem Wärmeaustauschmedium durchflossenen Wärmeregulierkammern geschaltet sind, so dass der Polymerisationsraum einer Polymerisationskammer von den Aussenwandungen der Wärmeregulierkammern und den Innenflächen des eingesetzten Rahmens begrenzt ist.

Jede Reaktionskammer wird dabei über eine nach aussen führende, mit einem Zweiweghahn versehene Zuleitung mit der zu polymerisierenden Phase befüllt. Die Rahmen und Wärmeregulierkammern können in der Spindelpresse gegeneinander bewegt werden. Dieses bekannte Verfahren und die bekannte Vorrichtung sind vor allem zur Herstellung von Scheiben oder Platten aus Acrylglas oder anderem organischen Glas geeignet. In der genannten Deutschen Reichspatentschrift ist zwar angegeben, dass sich das Verfahren auch zur Herstellung halbfester oder weicher Polymerisate eignet. Hierfür hat es jedoch bis jetzt keine Anwendung in der Praxis gefunden. Dies dürfte vor allem darauf zurückzuführen sein, dass die gleichzeitige Beschickung aller Kammerinhalte mit der zu polymerisierenden Phase, die für eine gleichmässige Polymerisation aller Kammerinhalte erforderlich ist, praktisch nicht durchzuführen war und dass die Entnahme halbfester oder weicher, gegebenenfalls klebriger Polymerisate aus den durch Rahmen und den Wänden der Heiz- bzw. Kühlkammern gebildeten Polymerisationskammern sehr umständlich und arbeitsaufwendig ist. Auch die empfohlene Auskleidung der Flachkammern mit Cellulosefolien oder flüssigkeitsdichten oder präparierten Papieren oder dergleichen änderte daran wenig oder nichts.

Man hat daher Polymerisationsverfahren, bei denen halbfeste Produkte, Gele oder formstabile Gallerten entstehen, in Rohren (DE-A 1959452, DE-A 2039582), Beuteln oder anderen transportierbaren Behältern (DE-A 20959241) oder in dünner Schicht auf einer sich bewegenden Oberfläche, wie einem Band oder einer Scheibe (vergl. US-A 4283517 und die dort zitierte Literatur) durchgeführt. Auch diese Verfahren weisen verschiedene Nachteile auf. So sind sie z.B. für die Herstellung grosser Polymerisatmengen nicht geeignet und/oder weisen den Nachteil auf, dass eine gezielte Temperaturführung nicht oder nur ungenügend erreichbar ist.

Durch die vorliegende Erfindung werden diese und andere Nachteile vermieden. Insbesondere kann ein gleicher zeitlich und örtlich definierter Temperaturverlauf in allen Kammerinhalten eingehalten werden, wodurch in allen Kammern halbfestes oder gelförmiges Polymerisat mit denselben Eigenschaftsparametern gebildet wird.

Die Erfindung betrifft eine Vorrichtung zur Überführung einer flüssigen in eine feste, vorzugsweise eine halbfeste, gel- oder gallertförmige Phase, wobei in einer Presse eine Mehrzahl von flachen, beheiz- bzw. kühlbaren, zusammenschiebbaren und auseinanderschiebbaren Reaktionskammern angeordnet ist. Die erfindungsgemässe Vorrichtung ist gekennzeichnet durch einen im Rand der zusammengeschobenen Reaktionskammern angeordneten Sammelkanal für die in die Reaktionskammern einzuführende flüssige Phase, von dem zu jeder Reaktionskammer eine in die Reaktionskammer mündende Verbindung abzweigt.

Die zusammenschiebbaren und auseinanderschiebbaren Reaktionskammern können dabei in verschiedener Weise gebildet werden, z.B. durch Platten mit jeweils zwischen zwei Platten gelegten Rahmen oder durch Platten mit umlaufenden erhöhten Rändern. Die Ausführung mit den Platten mit den erhöhten umlaufenden Rändern ist bevorzugt. Die Platten sind beheizbar bzw. kühlbar. Die zusammenschiebbaren und auseinanderschiebbaren Platten mit den gegebenenfalls dazwischengelegten Rahmen sind in Form eines zusammenpressbaren und wieder auseinanderschiebbaren Paketes in einer Presse angeordnet.

Es ist zweckmässig, möglichst viele Platten mit den gegebenenfalls dazwischengelegten Rahmen in dem Paket anzuordnen, damit möglichst viele Reaktionskammern, in denen die Phasenumwandlung durchgeführt wird, in dem Paket gebildet werden. Die Zahl der Platten und damit auch der Reaktionskammern ist im Prinzip nur durch die Grösse der zur Verfügung stehenden Presse begrenzt. Normalerweise besitzt die erfindungsgemässe Vorrichtung ca. 5 bis 120, vorzugsweise 30 bis 80, Reaktionskammern.

Beim Zusammenpressen eines Pakets, das aus mehreren Platten mit erhöhten umlaufenden Rändern besteht, wird zwischen je zwei Platten mit erhöhten umlaufenden Rändern eine Reaktionskammer gebildet. Die Dicke der Reaktionskammer ist dabei durch den gegenseitigen Abstand der Plattenflächen gegeben und ist durch die Dicke der umlaufenden Plattenränder wählbar. Beim Zusammenpressen eines Pakets, das aus Platten mit dazwischengelegten Rahmen besteht, wird jeweils zwischen zwei Platten und den dazwischengelegten Rahmen eine Reaktionskammer gebildet. Die Dicke der Reaktionskammer ist dabei durch die Dicke des Rahmens bedingt. Erfindungsgemäss ist im oberen Rand der zusammengeschobenen Reaktionskammern ein durch das Plattenpaket verlaufender Sammelkanal vorhanden, von dem in jeder Reaktionskammer eine Verbindung abzweigt. Zu diesem Zweck besitzt jede Platte und gegebenenfalls jeder Rahmen eine im oberen Teil im Rand quer, vorzugsweise senkrecht, zu der Rahmenfläche verlaufenden Bohrung mit verhältnismässig grossem Durchmesser, von der eine in die Reaktionskammer mündende Verbindung abzweigt. Diese Verbindung kann ebenfalls als Bohrung ausgeführt sein, wird jedoch zweckmässigerweise als flacher in der Oberfläche einer Platte liegender offener Kanal ausgebildet. Bei einem geschlossenen Paket bilden dann die senkrecht zu den Platten bzw. Rahmen verlaufenden Bohrungen einen im oberen Teil oder oberen Rand des Pakets verlaufenden Sammelkanal mit verhältnismässig grossem Durchmesser für die flüssige Phase, von dem in die einzelnen Reaktionskammern Verbindungen abzweigen.

Jede Reaktionskammer kann über den durch den oberen Rand des Plattenpakets verlaufenden Sammelkanal und den davon abzweigenden Verbindungen mit flüssiger Phase befüllt werden. Falls in den Platten oder den Rahmen keine Auslassöffnung für das Entweichen der gasförmigen Phase aus den Reaktionskammern vorhanden ist, müssen die Reaktionskammern vor dem Befüllungsvorgang evakuiert werden. Normalerweise ist daher in jeder Platte zusätzlich zu der Einlassöffnung noch eine Auslassöffnung für die gasförmige Phase vorhanden, so dass keine Notwendigkeit besteht, die Reaktionskammern vor der Befüllung mit flüssiger Phase zu evakuiren.

Vorzugsweise münden auch die Auslassöffnungen für die Entlüftung der Reaktionskammern in einen im oberen Teil oder oberen Rand des geschlossenen Pakets verlaufenden Entlüftungs-Sammelkanal. Jede Platte und ggf. jeder Rahmen besitzt in diesem Fall eine weitere senkrecht zur Fläche der Platte bzw. der Rahmenfläche verlaufende Bohrung im oberen Rand, von der aus eine als Bohrung oder vorteilhafterweise als in der Fläche der Platte liegender Kanal ausgebildete Verbindung in die Kammer mündet. Die Kammern eines geschlossenen Pakets werden dann über die im Rahmen des Pakets verlaufende Entlüftungs-Sammelleitung entlüftet.

Nach der Befüllung der Reaktionskammern mit der flüssigen Phase wird die Umwandlung in die feste Phase durchgeführt. Danach wird das aus den Platten und ggf. Rahmen bestehende Paket getrennt bzw. auseinandergenommen, wozu die einzelnen Platten und ggf. Rahmen des Pakets in der Regel auseinandergeschoben werden, wodurch die Reaktionskammern geöffnet werden und die in den Reaktionskammern gebildete feste Phase aus den geöffneten Reaktionskammern entnommen werden kann. Bei waagerecht hintereinander angeordneten Platten mit erhöhten umlaufenden Rändern fällt die feste Phase häufig von selbst aus den geöffneten Reaktionskammern nach unten.

Um eine gute Abdichtung jeder Reaktionskammer nach aussen sicherzustellen, muss in der Trennfläche jeder Reaktionskammer eine umlaufende Dichtung eingelegt sein. Diese Dichtung kann lose eingelegt sein. Zweckmässigerweise ist jedoch diese Dichtung in den Plattenrand fest eingelassen, wodurch die Handhabung erleichtert wird.

Die Bohrungen für die Sammelkanäle und die davon abzweigenden Verbindungen in die einzelnen Reaktionskammern müssen innerhalb des Plattenteils oder Rahmenteils liegen, der von der umlaufenden Dichtung begrenzt wird.

Die im geschlossenen Paket gebildeten flachen Reaktionskammern können einen quadratischen, rechteckigen, vieleckigen, runden, elliptischen oder anderen Querschnitt besitzen. Normalerweise besitzen sie einen quadratischen oder rechteckigen Querschnitt. Insbesondere für die Bildung von halbfesten, gel- oder gallertförmigen, gegebenenfalls klebrigen Phasen, wie sie z.B. bei der Durchführung von entsprechenden Polymerisationsverfahren oder Copolymerisationsverfahren entstehen, werden die Dicken der umlaufenden Ränder der Platten bzw. die Dicken der Rahmen so gewählt, dass Reaktionskammern mit einer Dicke von 2 bis 100 mm, vorzugsweise 10 bis 40 mm, im geschlossenen Paket entstehen. Bei diesen Abmessungen entspricht eine Reaktionskammer einer Scheibe, deren Breite und Höhe durch die inneren, vom erhöhtem Rand begrenzten Plattenabmessungen bzw. durch die lichte Länge und Breite des Rahmens und deren Dicke durch die Abstände der Plattenflächen im geschlossenen Paket gegeben ist, wobei diese Abstände durch die Dicke der umlaufenden Ränder bzw. die Dicke der Rahmen gegeben sind.

Die Platten und ggf. Rahmen werden aus einem Werkstoff hergestellt, dessen Eigenschaften den Eigenschaften der zu bearbeitenden flüssigen und der erhaltenen festen Phase angepasst sind. Geeignet sind z.B Metalle wie Gusseisen, Aluminium, Messing, Kupfer, Stahl, wobei die Metalle gegebenenfalls einen Überzug eines anderen Metalls, wie z.B. Blei, von Email, Gummi oder eines Kunststoffes besitzen können. Andere geeignete Materialien sind z.B. Kunststoffe wie z.B. Polytetrafluorethylen, Polyethylen, Polypropylen, Polyvinylidendifluorid etc. Auch Holz, gegebenenfalls mit einem Kunststoff beschichtet, kann geeignet sein. Für klebrige feste bzw. halbfeste, gel- oder gallertförmige Phasen, wie z.B. Polymerisate oder Copolymerisate auf der Basis von Salzen der Acrylsäure, Methacrylsäure, Acrylamid etc., haben sich als Werkstoffe Kunststoffe, insbesondere die genannten Kunststoffe, vorzugsweise Polypropylen, bewährt, die mit Talkum gefüllt sind. So weist z.B. ein mit 20 Gew.% mit Talkum gefülltes Polypropylen hervorragende antiadhäsive Eigenschaften auf und besitzt eine etwa doppelt so grosse Wärmeleitfähigkeit wie ungefülltes Polypropylen, wobei die bekannten günstigen Eigenschaften des Polypropylens wie Formstabilität, Flexibilität und geringes Gewicht erhalten geblieben sind.

Die Platten sind so ausgebildet, dass sie beheizt und/oder gekühlt werden können. Eine Beheizung kann z.B. durch eine in der Platte verlegte elektrische Widerstandsheizung erfolgen. Normalerweise erfolgt eine Beheizung oder Kühlung mittels eines geeigneten Wärmeaustauschmediums, das durch die entsprechend ausgebildeten Platten geleitet wird. Für die Aufnahme des Wärmeaustauschmediums sind die Platten z.B. hohl ausgebildet oder von einem Kanal oder mehreren Kanälen durchzogen. Ein einziger Kanal in einer Platte ist zweckmässigerweise mäanderförmig verlegt, um eine möglichst gleichmässige Beheizung oder Kühlung zu erreichen. Platten, die von einem Wärmeaustauschmedium durchströmt werden, müssen eine Zu- und eine Ableitung für das Wärmeaustauschmedium besitzen. Diese Zu- und Ableitung kann so ausgeführt sein, dass jede Platte von aussen, zweckmässigerweise über eine externe Sammelleitung, mit dem Wärmeaustauschmedium beaufschlagt werden kann. Vorteilhafterweise sind dabei die Zu- und Ableitung so angeordnet, dass das Wärmeaustauschmedium die einzelne Platte von unten nach oben, zweckmässigerweise in mehreren Kanälen, durchströmt. Es ist auch möglich, die Platten mit zwei voneinander getrennten Bohrungen senkrecht zur Plattenfläche im Plattenrand zu versehen, so dass bei zusammengehaltenen bzw. zusammengepressten Platten zwei durch das gesamte Plattenpaket laufende Sammelleitungen gebildet werden, von denen über Bohrungen das Wärmeaustauschmedium den Platten zugeführt und aus den Platten abgeführt werden kann.

Wenn das Wärmeaustauschmedium den Platten über Sammelleitungen zu- bzw. abgeführt wird, die durch das zusammengehaltene bzw. zusammengepresste Plattenpaket laufen, dann muss vor der Entnahme der festen Phase aus den Kammern das Wärmeaustauschmedium aus den Platten und Sammelleitungen entfernt werden, weil es sonst zu einer unerwünschten Vereinigung von fester Phase und Wärmeaustauschmedium kommt. Aus diesem Grund ist es in der Regel zweckmässiger, die Platten nicht über interne, im geschlossenen Plattenpaket verlaufende Sammelleitungen mit einem Wärmeaustauschmedium zu beaufschlagen, sondern über Zu- und Ableitungen, die an externe Sammelleitungen angeschlossen werden. Diese Zu- und Ableitungen können mit Schläuchen oder Rohrleitungen mit Gelenken an die Sammelleitungen oder Vorratsbehälter für das Wärmeaustauschmedium angeschlossen werden, damit ein problemloses Öffnen des Plattenpakets möglich ist.

In manchen Fällen kann der bei der Umwandlung der flüssigen in die feste Phase gewünschte Temperaturverlauf auch ohne Wärmezu- oder -abführung einfach durch geeignete Wahl des Werkstoffs und der Abmessungen der Platten bzw. der Rahmen (insbesondere der die Kammerdicke beeinflussenden Masse) erreicht werden.

Die Abführung von Wärme bei der Umwandlung der flüssigen in die feste Phase ist auch dadurch möglich, dass die Platten mit Hohlräumen versehen und mit Substanzen gefüllt werden, deren Schmelzpunkt in einem für den gewünschten Temperaturverlauf geeigneten Bereich liegt und die durch ihre Schmelzwärme in der Lage sind, einen ausreichend grossen Teil der Reaktionswärme aufzunehmen, ohne die eigene Temperatur wesentlich zu erhöhen. Als derartige Substanzen eignen sich z.B. Calciumchlorid (Schmelzpunkt 28°C), Glaubersalz (Schmelzpunkt 32°C), Dinatriumphosphat (Schmelzpunkt 35°C), verschiedene Paraffine etc.

Eine in vielen Fällen für die Herstellung von halbfesten, gel- oder gallertförmigen, insbesondere klebrigen Produkten, wie z.B. Co- oder Homopolymerisaten, besonders günstige Ausgestaltung einer für das Durchströmen mit einem Wärmeaustauschmedium ausgebildeten Platte besteht darin, dass die beiden den Kammern zugewandten Plattenflächen als wölbbare Membranen ausgebildet sind. Dadurch ist es möglich, in dem zusammengepressten Paket durch eine geringfügige Erhöhung des Drucks des flüssigen Wärmeaustauschmediums um z.B. 0,1 bis 0,5 bar, vorzugsweise 0,1 bis 0,3 bar, die Membranen in die Reaktionskammern hineinzuwölben und dadurch den Kammerinhalt zu verkleinern. Die Reaktionskammern werden dann über den im Plattenrand verlaufenden Sammelkanal mit der flüssigen Phase befüllt. Nach der Beendigung des Befüllungsvorgangs wird die Druckerhöhung des flüssigen Wärmeaustauschmediums wieder zurückgenommen und/oder der Druck auf der Kammerseite der Vorrichtung entsprechend erhöht, wodurch die Wölbung der Membranen verschwindet und sich der Inhalt der Reaktionskammern vergrössert. Dadurch wird erreicht, dass die noch im Sammelkanal und in den Verbindungen zwischen Sammelkanal und Reaktionskammern vorhandene flüssige Phase in die Reaktionskammern abläuft. Zur Bildung derartiger wölbbarer Membranen sind insbesondere die bereits genannten Kunststoffe geeignet. Die Membran kann z.B. eine Dicke von 1 bis 4 mm, vorzugsweise 2 bis 3,5 mm, besitzen. Der Rand der Membran ist mit dem Rand der Platte fest verbunden, z.B. verklebt oder verschweisst, oder ist mit der Platte aus einem Stück gefertigt.

Alle Platten und ggf. Rahmen eines Plattenpakets sind gleich ausgebildet mit Ausnahme der Kopf- und Fussplatte (erste und letzte Platte), die nur auf den den übrigen Platten zugewandten Seiten wie die übrigen Platten ausgebildet sind.

Für die durch das Plattenpaket verlaufenden Sammelkanäle, für die Zuführung der flüssigen Phase und der Entlüftung der Reaktionskammern, sind in der Kopf- und/oder Fussplatte entsprechende externe Ein- und Auslässe vorhanden. Entsprechendes gilt, falls den Platten ein Wärmeaustauschmedium über im Innern des Plattenpakets verlaufende Sammelleitungen zugeführt und aus den Platten abgeführt wird.

Es ist auch möglich, Messsonden, z.B. Temperaturfühler, in einer Reaktionskammer oder auf oder in einer Plattenfläche anzuordnen, um den Verlauf des gemessenen Parameters zu verfolgen und gegebenenfalls durch eine Änderung der Temperaturführung zu beeinflussen.

Die Presse kann in bekannter Weise, z.B. als mechanische oder als hydraulische Presse, ausgeführt sein. Normalerweise sind das ortsfeste Fussteil und das ebenfalls ortsfeste Kopfteil der Presse über Zugstangen oder Holme miteinander verbunden. Die Platten und ggf. Rahmen besitzen zum Verschieben auf den Zugstangen oder Holmen z.B. Räder, Rollen, Aufhängungen oder Auflagen.

An Hand der beiliegenden Figuren wird die Erfindung weiter erläutert. Es zeigen in beispielsweiser und schematischer Darstellung:

Figur 1a: die Ansicht einer Platte, mit erhöhten umlaufenden Rändern;

Figur 1b: den Schnitt durch die in Figur 1a dargestellte Platte längs der Linie A–A;

Figur 1c: die Ansicht einer Platte ohne erhöhte umlaufende Ränder;

Figur 1d: den Schnitt durch die in Figur 1c dargestellte Platte längs der Linie A–A;

Figur 1e: die Ansicht eines Rahmens;

Figur 1f: den Schnitt durch den in Figur 1e dargestellten Rahmen längs der Linie A–A.

Figur 2a: einen Längsschnitt durch ein zusammengepresstes Paket, das aus Platten der Figuren 1c und 1d mit dazwischengelegten Rahmen der Figuren 1e und 1f besteht,

Figur 2: einen Längsschnitt durch ein zusammengepresstes Paket, der in den Figuren 1a und 1b dargestellten Platten,

Figur 3 bis 5: Schnitte bzw. Teilschnitte durch anders ausgestaltete Platten,

Figuren 6a und 6b: einen Schnitt bzw. Teilschnitt durch zwei Platten mit wölbbaren Membranen und senkrechten Kanälen,

Figur 6c: den Schnitt durch die in Figur 6b dargestellte Platte längs der Linie B–B,

Figur 7: Schnitt durch eine Kopfplatte mit eingebautem Temperaturfühler,

Figur 8: das Fliessschema einer Anlage zur Durchführung von Polymerisationen unter Verwendung einer erfindungsgemässen Vorrichtung.

Die in der Figur 1a in der Aufsicht und in der Figur 1b im Schnitt längs der Linie A–A in Figur 1a dargestellte Platte 1 besitzt an beiden Seiten einen erhöhten umlaufenden Rand 2, der zur Plattenmitte hin abgeschrägt ist. Auf einer Plattenseite ist in diesen umlaufenden Rand die Dichtung 3 eingelassen. Der obere Plattenrand ist von den Bohrungen 4 und 5 durchbohrt. Von der Bohrung 4 verläuft der offene Kanal 6 im Plattenrand nach unten, und von der Bohrung 5 verläuft der offene Kanal 7 im Plattenrand nach unten. Die Platte besitzt an beiden Seiten Auflagen 8, mit denen sie auf den Zugstangen oder Holmen der Presse verschiebbar ist.

Die Platte 1 ist, wie aus Figur 1b ersichtlich, von einem mäanderförmig verlaufenden Kanal 9 durchzogen, der in eine Zuleitung 10 und eine Ableitung 11 für das Wärmeaustauschmedium mündet. Bei der in Figur 1b dargestellten Ausführungsform besitzt der Kanal 9 einen runden Ausschnitt und ist in die Platte 1 eingegossen. Die in der Figur 1c in der Aufsicht und in der Figur 1d im Schnitt längs der Linie A–A in Figur 1c dargestellte Platte 1a besitzt keinen erhöhten umlaufenden Rand. Der obere Plattenrand ist von den Bohrungen 4 und 5 durchbohrt. Die Platte besitzt an beiden Seiten Auflagen 8, mit denen sie auf den Zugstangen oder Holmen der Presse verschiebbar ist. Die Platte 1a ist wie die Platte 1, ebenfalls von einem mäanderförmig verlaufenden Kanal 9 durchzogen, der in eine Zuleitung 10 und eine Ableitung 11 für das Wärmeaustauschmedium mündet. Bei der in Figur 1c dargestellten Ausführungsform besitzt der Kanal 9 einen runden Querschnitt und ist in die Platte 1a eingegossen.

In Figur 1e ist ein Rahmen 1b in der Aufsicht und in Figur 1f im Schnitt längs der Linie A–A in Figur 1e dargestellt. Der obere Rand des Rahmens ist von den Bohrungen 4 und 5 durchbohrt. Von der Bohrung 4 verläuft der offene Kanal 6 in der Rahmenfläche nach unten, und von der Bohrung 5 verläuft der offene Kanal 7 in der Rahmenfläche nach unten. Der Rahmen 1b besitzt auf beiden Seiten je eine umlaufende, in den Rahmen eingelassene Dichtung 3. Der obere Rand des Rahmens ist von den Bohrungen 4 und 5 durchbohrt. Die an den beiden Seiten des Rahmens angebrachten Auflagen, zum Verschieben des Rahmens auf den Holmen oder Zugstangen der Presse sind wieder mit 8 beziffert.

In Figur 2 sind sechs der in den Figuren 1a und 1b dargestellten Platten 1 zusammen mit einer Kopfplatte 15 und einer Fussplatte 16 in Form eines zusammengepressten Pakets zwischen

dem ortsfesten Fussteil 17 und dem beweglichen Querhaupt 18 einer Presse angeordnet. Die Kopfplatte 15 und die Fussplatte 16 sind nur auf ihren dem Plattenpaket zugewandten Seiten wie die übrigen Platten 1 mit erhöhten Rändern 2 ausgebildet. Auf ihren anderen Seiten sind sie eben. In Figur 2 besitzen die Kopf- und die Fussplatte 15 und 16 je einen Wärmekanal 9. In manchen Fällen erübrigt sich jedoch eine Beheizung oder Kühlung der Kopf- und die Fussplatte 15 und 16. In dem zusammengepressten Paket werden zwischen den Platten 1 bzw. 15 und 16 Reaktionskammern 20 gebildet, die über den von den Bohrungen 4 gebildeten Sammelkanal (4–4) und den davon abzweigenden Kanälen 6 mit flüssiger Phase befüllt werden. Der Sammelkanal (4–4) mündet in den Anschluss 21 im Querhaupt 18. Wie aus der Figur 2 ersichtlich ist, besitzt die Kopfplatte 15 ebenfalls eine Bohrung 4 und einen davon abzweigenden Kanal 6, während die Fussplatte 16 keine derartige Ausgestaltung besitzt.

Die Platten 1 und die Kopfplatte 15 besitzen Bohrungen 5 mit davon abzweigenden, in den Trennflächen der Kammern verlaufenden Kanälen 7, die in Figur 2 jedoch nicht sichtbar sind und die zur Entlüftung der Kammern 20 dienen. Durch die Bohrungen 5 wird bei zusammengepresstem Plattenpaket ein Sammelkanal 5–5 gebildet.

In Figur 2a sind sieben der in an Figuren 1c und 1d dargestellten Platten 1a zusammen mit einer Fussplatte 16a und sieben der in den Figuren 1e und 1f dargestellten Rahmen 16 in Form eines zusammengepressten Pakets zwischen dem ortsfesten Fussteil 17 und dem beweglichen Querhaupt 18 einer Presse angeordnet. Die Fussplatte 16a besitzt keine Bohrung 4. In dem zusammengepressten Paket werden zwischen den Platten 1a und den Rahmen Reaktionskammern 20 gebildet, die über den von den Bohrungen 4 gebildeten Sammelkanal (4–4) und den davon abzweigenden Kanälen 6 mit flüssiger Phase befüllt werden. Der Sammelkanal (4–4) mündet in den Anschluss 21 im Querhaupt 18.

Sofern nichts anderes angegeben, wird bei den folgenden Erläuterungen auf die bevorzugte Ausführungsform der Platten mit umlaufenden erhöhten Rändern Bezug genommen. Die Ausführungen gelten jedoch für ebene Platten mit dazwischen gelegten Rahmen sinngemäss.

Um die Platten mittels eines flüssigen oder gasförmigen Wärmeaustauschmediums zu kühlen oder zu heizen, können sie auch hohl oder von mehreren Kanälen durchzogen ausgeführt werden. Der oder die Kanäle können nicht nur einen runden, sondern auch einen quadratischen oder einen anderen beliebigen Querschnitt besitzen. Eine Platte 1 mit einem Kanal 9 kann z.B. auch aus zwei entsprechend geformten Hälften zusammengesetzt, z.B. zusammengeschweisst oder zusammengeklebt, sein, wie dies in Figur 3 angedeutet ist.

In den Figuren 4a und 4b sind vorteilhafte Ausführungen der Bohrungen 4 in der Platte 1 bzw. 15 dargestellt, die darin bestehen, dass die Bohrung 4 konisch wie in Figur 4a oder doppelkonisch wie in Figur 4b ausgeführt ist, wobei der grössere Durchmesser in der Ebene des Kanals 6 liegt, so dass der Sammelkanal 4–4 im Bereich jeder Verbindung 6 zu der Verbindung 6 hin geneigt ist. Dadurch wird erreicht, dass die durch den Sammelkanal 4–4 geleitete flüssige Phase vollständig durch die Verbindungen 6 in die Reaktionskammern 20 ablaufen kann und im Sammelkanal 4–4 keine flüssige Phase zurückbleibt. Dies kann auch durch eine entsprechend andere, z.B. ballige, konkave oder konvexe Ausführung der Bohrung 4 in jeder Platte bewirkt werden. Die Achse der Bohrungen 4 verläuft normalerweise senkrecht zu den Platten. Auch durch eine geringe Abweichung der Achse von der senkrecht zur Plattenfläche verlaufenden Achse kann erreicht werden, dass sich die Bohrung 4 in einer Platte zu der Verbindung 6 hin neigt und ein vollständiges Leerlaufen des von den Bohrungen 4 gebildeten Sammelkanals 4–4 erreicht wird.

Die Reaktionskammern 20 brauchen in bezug auf die Berührungsfläche zweier Platten keinen symmetrischen Querschnitt zu besitzen. Durch die in den Figuren 5a bis 5c dargestellte asymmetrische Ausgestaltung des erhöhten Randes 2 werden zwischen je zwei Platten 1 Reaktionskammern 20 mit asymmetrischem Querschnitt gebildet. Diese asymmetrische Querschnittsausbildung der Kammern bringt bei der Entnahme von manchen gel- oder gallertförmigen Phasen Vorteile, weil sich z.B. eine Gelplatte 25 zuerst von den abgeschrägten Kanten löst. Deshalb löst sich eine als feste Phase gebildete Gelplatte 25 bei der in den Figuren 5a bis c dargestellten asymmetrischen Kammerausbildung beim Öffnen des Plattenpakets zunächst im oberen Bereich der rechten Platte 1 und gleichzeitig im unteren Bereich der linken Platte 1 von den Wänden der beiden Platten 1 und verformt sich dadurch, wie in Figur 5b dargestellt, S-förmig. Beim weiteren Auseinanderschieben der Platten 1 löst sich dann die Gelplatte 25 auch in ihrem oberen Teil von der Kammerwand und fällt dann durch ihr Eigengewicht nach unten aus der geöffneten Vorrichtung heraus, wobei sie sich auch in ihrem unteren Teil von der Kammerwand ablöst, vgl. Figur 5c.

In den Figuren 6a und 6b sind Teilschnitte durch zwei aneinandergepresste Platten 1 dargestellt, die von mehreren senkrechten Kanälen 9 durchzogen sind und bei denen die einer Kammerseite zugewandte Seite als wölbbare Membran 26 ausgebildet ist. Die senkrechten Kanäle 9 verbinden die im oberen und unteren Rand der Platten 1 angeordneten, senkrecht zur Zeichenebene der Figuren 6a und 6b verlaufenden Verteilungskanäle 27a und 28a bzw. 27b und 28b miteinander. Die beiden unteren, im Rand einer Platte liegenden Verteilungskanäle 28a und 28b münden ihrerseits in einen gemeinsamen (nicht dargestellten) Einlass für das Wärmeaustauschmedium, und die beiden im oberen Rand einer Platte liegenden Verteilungskanäle 27a und 27b münden ihrerseits in einen gemeinsamen (nicht dargestellten) Auslass für das Wärmeaustauschmedium. In der Mitte einer wölbbaren Membran 26

ist eine Distanznoppe 29 vorhanden, deren Höhe so gewählt wird, dass eine zu starke Wölbung der Membran 26 verhindert wird.

Die wölbbaren Membranen 26 können z.B. von einer ca.1 bis 5 mm dicken Kunststoffplatte gebildet werden, die an ihren Rändern mit der Platte 1 verschweisst, verklebt oder auf sonstige Weise fest verbunden ist. Durch die in den Figuren 6a und 6b nicht dargestellten Zuleitungen wird den Platten ein gasförmiges, normalerweise aber flüssiges Wärmeaustauschmedium zugeführt und in die Verteilungskanäle 28a und 28b geleitet. Von dort strömt das Wärmeaustauschmedium durch die senkrechten Kanäle 9 nach oben, die in die Verteilungskanäle 27a und 27b münden. Aus den Verteilungskanälen 27a und 27b wird das Wärmeaustauschmedium nach aussen abgeleitet.

Der Druck des flüssigen Wärmeaustauschmediums wird vor der Befüllung der Reaktionskammern 20 mit der flüssigen Phase, die in eine feste Phase umgewandelt werden soll, geringfügig erhöht, beispielsweise um 0,1 bis 0,3 bar, wodurch sich die Membranen 26 in die Reaktionskammern 20 hineinwölben, wie dies in Figur 6a schematisch in etwas übertriebenem Masse dargestellt ist. Bei aufrechterhaltenem Druck des Wärmeaustauschmediums, d.h. bei gewölbten Membranen 26, werden nun die Reaktionskammern 20 über den Sammelkanal 4-4 und die Verbindungen 6 mit flüssiger Phase 30 befüllt, wie dies in Figur 6a schematisch dargestellt ist. Die in den Reaktionskammern 20 vorhandene gasförmige Phase entweicht während des Befüllungsvorgangs durch die in den Figuren 6a und 6b nicht sichtbaren Verbindungen 7 und den ebenfalls nicht sichtbaren Sammelkanal 5-5 nach aussen. Nachdem die Reaktionskammern 20 bei gewölbten Membranen 26 mit der flüssigen Phase 30 befüllt worden sind, wird der Druck des Wärmeaustauschmediums wieder auf Normaldruck erniedrigt und/oder der Druck auf der Kammerseite der Vorrichtung über den Druck auf der Wärmetauscherseite erhöht.

Dies kann z.B. durch Aufpressen eines Inertgases, wie Stickstoff, auf die flüssige Phase 30 erfolgen, wodurch die Wölbungen der Membranen 26 wieder verschwinden und die Membranen 26 fest an die Kanäle 9 angepresst werden, vgl. Figur 6b. Damit ist eine Vergrösserung des Volumens der Reaktionskammern 20 verbunden, wodurch nach dem Abschalten der Zufuhr der flüssigen Phase 30 über den Sammelkanal 4-4 erreicht wird, dass die noch im Sammelkanal 4-4 und in den Verbindungen 6 vorhandene flüssige Phase in die Kammern 20 fliesst und im Sammelkanal 4-4 und den Verbindungskanälen 6 keine flüssige Phase zurückbleibt.

Die Figur 6c zeigt den Schnitt durch die in Figur 6b dargestellte Platte längs der Linie B-B. In der Platte sind zu beiden Seiten jeweils neun senkrecht verlaufende Kanäle 9 vorhanden, die den Kammerseiten zu von den wölbbaren Membranen 26 abgedeckt werden.

Figur 7 zeigt eine besondere Ausführung einer Fussplatte mit eingebautem Temperaturfühler im Schnitt. Diese Fussplatte 16b besitzt wieder den erhöhten umlaufenden Rand 2 auf der dem Plattenpaket zugewandten Seite. Der vom erhöhten umlaufenden Rand 2 umschlossene Teil der Platte, der beim Zusammenpressen im Plattenpaket mit einer anderen, entsprechend ausgebildeten Platte 1 die Hälfte einer Reaktionskammer 20 bilden würde, ist mit einem Isoliermaterial 31, z.B. geschäumtem Polystyrol, ausgefüllt und von der Membran 32 abgedeckt. Eine Distanznoppe 33 verhindert ein Durchwölben der Membran 32. In der Membran 32 ist von der Plattenseite her ein Temperaturfühler 34 angeordnet, dessen Anschlussleitungen 35 nach aussen geführt sind. Mit Hilfe einer derartigen Anordnung kann der Temperaturverlauf während der Phasenumwandlung in der Kammer gemessen und gegebenenfalls durch Änderung der Temperaturen und/oder der Strömungsgeschwindigkeiten des Wärmeaustauschmediums beeinflusst werden.

In Figur 7 ist links angrenzend an die Fussplatte 16b noch ein Teil einer Platte 1 dargestellt.

Die in Figur 8 schematisch dargestellte Anlage ist insbesondere zur Durchführung eines Polymerisations- bzw. Co-Polymerisationsverfahrens, bei dem ein gel- oder gallertförmiges, gegebenenfalls klebriges, Produkt entsteht, unter Verwendung einer erfindungsgemässen Vorrichtung geeignet. (Sofern bei der nachfolgenden Erläuterung der Figur 8 Bezugsziffern erwähnt werden, die in der Figur 8 aus Platzgründen nicht dargestellt sind, betreffen diese Bezugsziffern Sachverhalte, die in den vorhergehenden Figuren bereits im einzelnen erläutert worden sind.)

Die Presse besteht aus dem ortsfesten Fussteil 17, dem ortsfesten Kopfteil 35, dem beweglichen Querhaupt 18, das vom Stempel 36 der (nicht dargestellten) Pressenhydraulik bewegt wird. Zwischen Querhaupt 18 und Kopfteil 17 sind die Kopfplatte 15, die Fussplatte 16b und dazwischen zwei Platten 1 angeordnet. (In der praktischen Ausführung sind zwischen Kopfplatte und Fussplatte in der Regel nicht nur zwei Platten 1, sondern eine grössere Anzahl von identisch ausgebildeten Platten 1 angeordnet.) Die Ausführung der Platten 1 entspricht der in den Figuren 6a bis 6c dargestellten Ausführung. Wie aus der Figur 8 ersichtlich, ist der hier mit 4 bezeichnete Sammelkanal durch das Fussteil 17 der Presse nach aussen geführt und der hier mit 5 bezeichnete Sammelkanal durch das Querhaupt 18 der Presse nach aussen geführt. Es wäre z.B. aber auch möglich, beide Kanäle über die Kopfplatte oder die Fussplatte nach aussen zu führen.

Die Platten 1 und die Kopfplatte 15 sind, wie dies in den Figuren 6a bis 6c im einzelnen für die Platten 1 dargestellt ist, von Kanälen 9 durchzogen.

Die von Kanälen 9 durchzogenen Platten 1 und 15 besitzen für die Zuführung des Wärmeaustauschmediums die Anschlüsse 10 und für dessen Abführung die Anschlüsse 11, die an die Leitungen 42 und 43 angeschlossen sind.

Die Anlage enthält ferner den statischen

Mischbehälter 44, den Vorratsbehälter 45, die Leitungen 46 bis 56, die Pumpen 57 und 69, den Kugelhahn 58 und die Ventile 59 bis 68.

Zunächst wird die Produktseite der Anlage bei geschlossenen Ventilen 63, 64, 65, 67 und geöffneten Ventilen 66 und 68 über die Leitungen 48 und 56 evakuiert, wobei das Vakuum an die Leitung 56 angelegt wird. Gleichzeitig wird die Wärmeträgerseite der Anlage bei geschlossenen Ventilen 59, 61, 62, bei geöffnetem Ventil 60 über die Anschlüsse 11 und die Leitungen 42 und 53 evakuiert, wobei das Vakuum an die Leitung 53 angelegt wird. Dann wird das Ventil 60 angeschlossen und über die Leitung 43 bei geöffneten Ventilen 61 und 62 von der Pumpe 57 Wärmeaustauschflüssigkeit zugeführt und über die Anschlüsse 10 den Verteilungskanälen der Platten 1 und 15 zugeführt, die in der Figur 6a mit 28a und 28b beziffert sind. Von diesen Verteilungskanälen aus wird die Wärmeaustauschflüssigkeit auf die in den Figuren 6a bis 6c mit 9 bezifferten Kanäle 9 verteilt, in denen sie nach oben strömt und sich in den Verteilungskanälen 27a und 27b sammelt, und von dort über die Anschlüsse 11 und die Leitung 42 zu dem (nicht dargestellten Kühl- oder Heizaggregat) zurückgeführt wird. Nach der Temperierung wird das Wärmeaustauschmedium von neuem von der Pumpe 57 umgewälzt.

Auf der Produktseite wird das Ventil 68 angeschlossen und die Produktseite über die Leitungen 50 und 46 bei geöffneten Ventilen 67 und 63 mit Inertgas, z. B. Stickstoff, befüllt, das über die Leitungen 50 und 55 zugeführt wird. Dann wird bei geschlossenem Kugelhahn 58 und geöffneten Ventilen 64 und 65 Monomerenlösung über die Leitung 51 in das Ansatzgefäss 44 gegeben, dessen Volumen z. B. 2 bis 10%, vorzugsweise 3 bis 5%, kleiner ist als das Gesamtvolumen aller Reaktionskammern 20. Dann wird der Druck auf der Wärmeträgerseite um z. B. 0,1 bis 0,3 bar erhöht, so dass sich die wölbbaren Membranen 26 der Platten nach innen in die Kammern 20 wölben. Dann wird der Kugelhahn 58 geöffnet und die Monomerenlösung, welche die flüssige Phase darstellt, über die Leitung 46 und den Sammelkanal 4 und die von diesem Sammelkanal abzweigenden Verbindungen 6 in die Reaktionskammern 20 geleitet. Dabei wird gleichzeitig aus dem Vorratsgefäss 45 von der Dosierpumpe 69 Katalysatorlösung über die Leitung 47 in die in der Leitung 46 fliessende Monomerenlösung zudosiert, entsprechend dem Durchsatz der Monomerenlösung durch die Leitung 46.

Nachdem der Ansatzbehälter 44 leergelaufen ist, wird der Druck auf der Produktseite des Polymerisationsapparates durch Erhöhung des Druckes des Inertgases so weit gesteigert, bis er über dem des Wärmeträgers liegt. Hierdurch wird die Wölbung der Membranen rückgängig gemacht, so dass sich das Volumen der Reaktionskammern 20 gegenüber dem vorherigen Zustand vergrössert und die bis dahin ganz oder teilweise mit Monomerenlösung gefüllten Zu- und Entlüftungsleitungen bzw. -kanäle in den Platten leerlaufen.

Die Temperatur der Wärmeträgerflüssigkeit wird entsprechend dem Stand der Polymerisation so eingestellt, dass sich der gewünschte Temperaturverlauf im Produkt ergibt. Nach Abschluss der Polymerisation wird der Druck auf der Produkt- und Wärmeaustauscherseite auf Normaldruck erniedrigt, die Zufuhr von Inertgas abgeschaltet, die Produktseite belüftet und anschliessend die Presse geöffnet und die Plattenhälften nacheinander auseinandergedrückt, so dass die Gelplatten entnommen werden können.

Die Leitung 51 mit dem Ventil 64 dient auch zur Zufuhr von Spülflüssigkeit in dem Mischbehälter 44, aus dem sie über den Kugelhahn 58 und die Leitung 52 abgeleitet wird.

Die erfindungsgemässe Vorrichtung ist vorzugsweise zur Durchführung solcher Polymerisationsverfahren geeignet, bei denen durch Homo-, Co- oder Mischpolymerisation halbfeste, gel- oder gallertartige, gegebenenfalls auch klebrige, in der Regel wasserlösliche Produkte entstehen. Einige Monomere, aus denen derartige Produkte hergestellt werden können, sind in der Einleitung beispielsweise angegeben. Polymerisationen, die in der erfindungsgemässen Vorrichtung besonders vorteilhaft durchgeführt werden können, sind z. B. beschrieben in:

DE-A 3 027 422, DE-A 2 931 707, DE-A 2 807 709, DE-A 2 502 012, DE-B 2 444 108, DE-C 1 101 760, US-C 3 953 342, US-C 3 768 565, US-C 3 907 927, US-C 3 926 718, US-C 3 948 783, US-C 3 929 741.

In der erfindungsgemässen Vorrichtung können beispielsweise die hochmolekularen, wasserlöslichen Copolymerisatgele der DE-A 3 027 422 hergestellt werden, die in statistischer Verteilung zu 5 bis 60 Gew.% aus Resten der Formel I

$$-CH_2-CH-Y-SO_3^-X^+ \qquad (I)$$

2 bis 40 Gew.% aus Resten der Formel II

$$-CH_2-CH-N(R^1)-CO-R^2 \qquad (II)$$

und 38 bis 93 Gew.% aus Resten der Formel III

$$-CH_2-CH-CONH_2 \qquad (III)$$

bestehen, wobei $R^1$ und $R^2$ gleich oder verschieden sind und Wasserstoff, Methyl, Ethyl oder gegebenenfalls zusammen auch Trimethylen, Y den Rest $-CO-NH-C(CH_3)_2-$ oder eine direkte Bindung und $X^+$ ein Kation bedeuten. Diese Produkte können auch in Form ihrer Partialhydrolysate vorliegen.

Zur Herstellung von je 100 Gewichtsteilen des Copolymerisats werden 5 bis 60 Gewichtsteile 2-Acrylamido-2-methyl-propansulfonsäure der Formel Ia

$$CH_2=CH-CO-NH-C(CH_3)_2-CH_2-SO_3H \qquad (Ia)$$

und/oder Vinylsulfonsäure der Formel Ib

$$CH_2=CH-SO_3H \qquad (Ib)$$

in Wasser gelöst, durch Zusatz einer Base wird die Sulfosäure neutralisiert, danach werden 2 bis 40 Gewichtsteile eines Vinylacylamids der Formel IIa

$$CH_2=CH-N(R^1)-CO-R^2 \qquad (IIa)$$

und 38 bis 93 Gewichtsteile Acrylamid zugefügt, die Copolymerisation in an sich bekannter Weise eingeleitet, und die Polymerisation bei 0 bis 130°C, vorzugsweise zwischen 10 und 100°C, bei Normaldruck oder erhöhtem Druck, gegebenenfalls unter Schutzgasatmosphäre in einer erfindungsgemässen Vorrichtung durchgeführt.

Zur Auslösung der Polymerisation können energiereiche elektromagnetische Strahlen oder die üblichen chemischen Polymerisationsinitiatoren herangezogen werden, z. B. organische Peroxide, wie Benzoylperoxid, tert. Butyl-hydroperoxid, Methylethyl-keton-peroxid, Cumol-hydroperoxid, Azoverbindungen, wie Azo-di-iso-butyro-nitril, sowie anorganische Peroxyverbindungen, wie $(NH_4)_2S_2O_8$ oder $K_2S_2O_8$ oder $H_2O_2$ gegebenenfalls in Kombination mit Reduktionsmitteln, wie Natriumhydrogensulfit, oder Redoxsysteme, welche als reduzierende Komponente eine aliphatische und aromatische Sulfinsäure, wie Benzolsulfinsäure und Toluolsulfinsäure, oder Derivate dieser Säuren enthalten, wie z. B. Mannichaddukte aus Sulfinsäure, Aldehyden und Aminoverbindungen, wie sie in der deutschen Patentschrift 1 301 566 beschrieben sind. Pro 100 g Gesamtmonomeren werden in der Regel 0,03 bis 2 g des Polymerisationsinitiators eingesetzt.

Während der Polymerisation kann auch eine gleichzeitige partielle Verseifung durchgeführt werden, wozu der Monomerenlösung eine geeignete wasserlösliche Base, wie z. B. KOH oder NaOH, zugesetzt wird. Auch können der Monomerenlösung weitere vorteilhafte Zusätze, wie z. B. Salze der Borsäure, zugesetzt sein.

Durch mehrstündiges Nachheizen der Polymerisatgele in der geschlossenen erfindungsgemässen Vorrichtung im Temperaturbereich von 50 bis 130°C, vorzugsweise 70 bis 100°C, können die Qualitätseigenschaften der Polymerisatgele noch verbessert werden.

Mit Hilfe der erfindungsgemässen Vorrichtung kann die bei einer Polymerisation auftretende Reaktionswärme so gleichmässig und wirkungsvoll abgeführt werden, dass es normalerweise möglich ist, wesentlich konzentriertere Monomerenlösungen zu polymerisieren, als dies ohne Verwendung der erfindungsgemässen Vorrichtung der Fall ist. Typisch sind z. B. Konzentrationszunahmen um 30 bis 50 relative Prozent.

Durch die gleichmässige Wärmeabfuhr in der erfindungsgemässen Vorrichtung werden bei Polymerisatgelen oder -gallerten in der Regel höhere Molgewichte der Polymerisate erreicht, was im Hinblick auf die anwendungstechnischen Eigenschaften der Polymerisatgele, wie z. B. als Flockungs- oder Sedimentationsmittel, als Strömungsbeschleuniger etc., erwünscht ist, weil dadurch in der Regel eine bessere Wirkung erzielt wird.

Beispiel 1

a) Herstellung der Monomerlösung:

in einem 10-l-Glasbehälter, ausgestattet mit Planschliffdeckel, Rührer, Thermometer, Gaseinleitungsrohr und Bodenauslaufventil werden 2772 g 25%ige Natriumvinylsulfonat-Lösung und 2500 g entioniertes Wasser vorgelegt. Unter Rühren werden in diese Lösung 1501,5 g Acrylamid und 115,5 g N-Vinyl-N-methylacetamid sowie 40g einer 10%igen Dibutylammoniumchlorid-Lösung nacheinander eingetragen. In diese Lösung wird unter weiterem Rühren 20 Minuten Stickstoff eingeleitet. Danach setzt man 1,5 g Ammoniumperoxodisulfat sowie 1,5 g Natriumhydrogensulfit – gelöst in jeweils 35 g entionisiertem Wasser – zu und lässt weitere 3 Minuten unter Einleiten von Stickstoff rühren. Die Lösung weist hierbei eine Temperatur von 20°C auf; die Konzentration der Summe der Vinylmonomeren beträgt ca. 33%, bezogen auf den Gesamtansatz.

b) Polymerisation:

Ein – wie zuvor ausführlich beschriebener – Polymerisationsapparat nach dem Kammerprinzip, bestehend aus 3 Vollkammern mit den Abmessungen 272 × 272 × 30 mm sowie einer Halbkammer zur Temperaturmessung mit den Abmessungen 272 × 272 × 1,5 mm, wird durch 2maliges Evakuieren der Reaktionskammer und anschliessendem Einleiten von Stickstoff bis zum Atmosphärendruck für die Aufnahme der Monomer-Lösung vorbereitet. Durch Anlegen eines leichten Überdrucks (ca. 0,3 bar) auf der Kühlwasserseite wird das Volumen der Reaktionskammer infolge der Membranwölbung geringfügig verkleinert. Sodann lässt man die Monomer-Lösung über eine Schlauchverbindung zum Befüllkanal des Polymerisationsapparates aus dem 10-l-Glasbehälter in den Polymerisationsapparat fliessen, wobei der aus den Reaktionskammern verdrängte Stickstoff über den Entlüftungskanal und eine Schlauchleitung in den 10-l-Kolben geleitet wird. Danach gibt man auf die Reaktionskammer einen leichten Stickstoffüberdruck (ca. 0,5 bar), wodurch infolge des Zurückdrückens der Membranwände das maximale Volumen der Reaktionskammer und damit eine vollständige Entleerung der Zuführungsleitung erreicht wird. Nach einer Induktionszeit von ca. 30 Minuten setzt die Polymerisation ein, was an einem leichten Temperaturanstieg zu erkennen ist. Durch entsprechende Wahl von Kühlwassertemperatur und -durchsatz wird die Reaktionstemperatur zwischen 20 und 30°C gehalten. Nach ca. 120 Minuten ist die Polymerisation beendet. Der Polymerisationsapparat wird geöffnet; in den Reaktionskammern resultieren Gelplatten, die sich leicht aus dem Apparat entnehmen lassen.

Die Viskosität einer 0,2%igen (bezogen auf das Polymerisat) wässrigen Lösung mit einem Salz-

gehalt von 130 g NaCl und 10 g $CaCl_2$ pro Liter, die in einem Brookfield-Viskosimeter bei einer Temperatur von 20°C und einem Schergefälle von D = $7,35^{-1}$ gemessen wird, beträgt 8,7 mPa.s.

Vergleichsbeispiel 1

a) Die Herstellung der Monomerlösung erfolgt wie im Beispiel 1, jedoch werden zusätzlich zu den 2500 g weitere 2271 g entionisiertes Wasser zugesetzt, so dass die Konzentration der Summe der Vinylmonomeren, bezogen auf den Gesamtansatz, ca. 25% beträgt.

b) Die Monomerlösung wird im 10-l-Gefäss belassen, die Stickstoffeinleitung beendet und der Rührer hochgezogen. Nach einer Induktionszeit von ca. 30 Minuten setzt die Polymerisation ein, wobei die Temperatur von 20°C auf ca. 85°C ansteigt und die Lösung in ein Gel übergeht.

Die Viskosität einer 0,2%igen (bezogen auf das Polymerisat) wässrigen Lösung mit einem Salzgehalt von 130 g NaCl und 10 g $CaCl_2$ pro Liter, die in einem Brookfield-Viskosimeter bei einer Temperatur von 20°C und einem Schergefälle von D = 7,3 $s^{-1}$ gemessen wird, beträgt 3,8 mPa.s.

## Patentansprüche

1. Vorrichtung zur Überführung einer flüssigen in eine feste, vorzugsweise eine halbfeste, gel- oder gallertförmige Phase, wobei in einer Presse eine Mehrzahl von flachen, beheiz- bzw. kühlbaren, zusammenschiebbaren und auseinanderschiebbaren Reaktionskammern angeordnet ist, die zusammenschiebbaren und auseinanderschiebbaren Reaktionskammern dabei in verschiedener Weise gebildet werden können, z.B. durch Platten mit jeweils zwischen zwei Platten gelegten Rahmen oder durch Platten mit umlaufenden erhöhten Rändern, gekennzeichnet durch einen im Rand der zusammengeschobenen Reaktionskammern angeordneten Sammelkanal für die in die Reaktionskammern einzuführende flüssige Phase, von dem zu jeder Reaktionskammer eine in die Reaktionskammer mündende Verbindung abzweigt.

2. Vorrichtung nach Anspruch 1, gekennzeichnet durch einen im Rand der zusammengeschobenen Reaktionskammern angeordneten Sammelkanal für die aus den Reaktionskammern abzuführende gasförmige Phase, von dem zu jeder Reaktionskammer eine in die Reaktionskammer mündende Verbindung abzweigt.

3. Vorrichtung nach Anspruch 1 und/oder 2, dadurch gekennzeichnet, dass die Reaktionskammern von heiz- und/oder kühlbaren Platten mit erhöhten umlaufenden Rand gebildet werden.

4. Vorrichtung nach einem oder mehreren der Ansprüche 1 bis 3, dadurch gekennzeichnet, dass die Wände der Reaktionskammern als wölbbare Membranen ausgebildet sind.

5. Vorrichtung nach Anspruch 4, dadurch gekennzeichnet, dass die wölbbare Membran mindestens eine Distanznocke besitzt.

6. Vorrichtung nach einem oder mehreren der Ansprüche 1 bis 5, dadurch gekennzeichnet, dass die quer zur Plattenfläche verlaufende Bohrung zu der Verbindung hin geneigt ausgeführt ist.

## Claims

1. Device for converting a liquid phase into a solid phase, preferably a semi-solid, gel-like or jelly-like phase, wherein a plurality of flat, heatable or coolable reaction chambers which can be pushed together and pushed apart is arranged in a press, it being possible for the reaction chambers, which can be pushed together and pushed apart, to be formed in different ways, e.g. by plates with frames each arranged between two plates or by plates with raised circumferential edges, characterised by a collecting channel, for the liquid phase to be introduced into the reaction chambers, which is located in the edge of the telescoped reaction chambers and from which a connection leading into the reaction chambers branches off to each reaction chamber.

2. Device according to Claim 1, characterised by a collecting channel, for the gaseous phase to be removed from the reaction chambers, which is located in the edge of the telescoped reaction chambers and from which a connection leading into the reaction chambers branches off to each reaction chamber.

3. Device according to Claim 1 and/or 2, characterised in that the reaction chambers are formed by heatable and/or coolable plates having a raised circumferential edge.

4. Device according to one or more of Claims 1 to 3, characterised in that the walls of the reaction chambers are in the form of curvable membranes.

5. Device according to Claim 4, characterised in that the curvable membrane has at least one spacer knob.

6. Device according to one or more of Claims 1 to 5, characterised in that the drilled hole running transversely to the surface of the plates is constructed so as to slope towards the connection.

## Revendications

1. Dispositif destiné à la transformation d'un fluide en une phase solide, de préférence une phase semisolide, en forme de gel ou gelée, dans lequel sont disposées dans une presse plusieurs chambres de réaction plates qui peuvent être chauffées ou refroidies, pouvant coulisser en se rapprochant ou en s'écartant, les chambres de réaction pouvant coulisser en se rapprochant ou en s'écartant peuvent y être réalisées de manière différente, p.e. par des plaques avec des cadres disposés chaque fois entre deux plaques ou par des plaques à bords périphériques surélevés, caractérisé par un canal collecteur disposé dans le bord des chambres de réaction rapprochées par coulissement destiné à la phase fluide à amener

dans les chambres de réaction à partir duquel dérive pour chaque chambre de réaction une liaison débouchant dans la chambre de réaction.

2. Dispositif selon la revendication 1, caractérisé par un canal collecteur disposé dans le bord des chambres de réaction rapprochées par coulissement pour la phase gazeuse à évacuer des chambres de réaction, à partir duquel dérive vers chaque chambre de réaction une liaison qui débouche dans la chambre de réaction.

3. Dispositif selon la revendication 1 et/ou 2, caractérisé en ce que les chambres de réaction sont réalisées par des plaques qui peuvent être chauffées ou refroidies avec un bord périphérique surélevé.

4. Dispositif selon une ou plusieurs des revendications 1 à 3, caractérisé en ce que les parois des chambres de réaction sont réalisées comme membranes susceptibles d'être bombées.

5. Dispositif selon la revendication 4, caractérisé en ce que la membrane susceptible d'être bombée possède au moins un ergot de distance.

6. Dispositif selon une ou plusieurs des revendications 1 à 5, caractérisé en ce que l'alésage de tracé transversal à la surface de plaque est réalisé inclinée par rapport à la liaison.

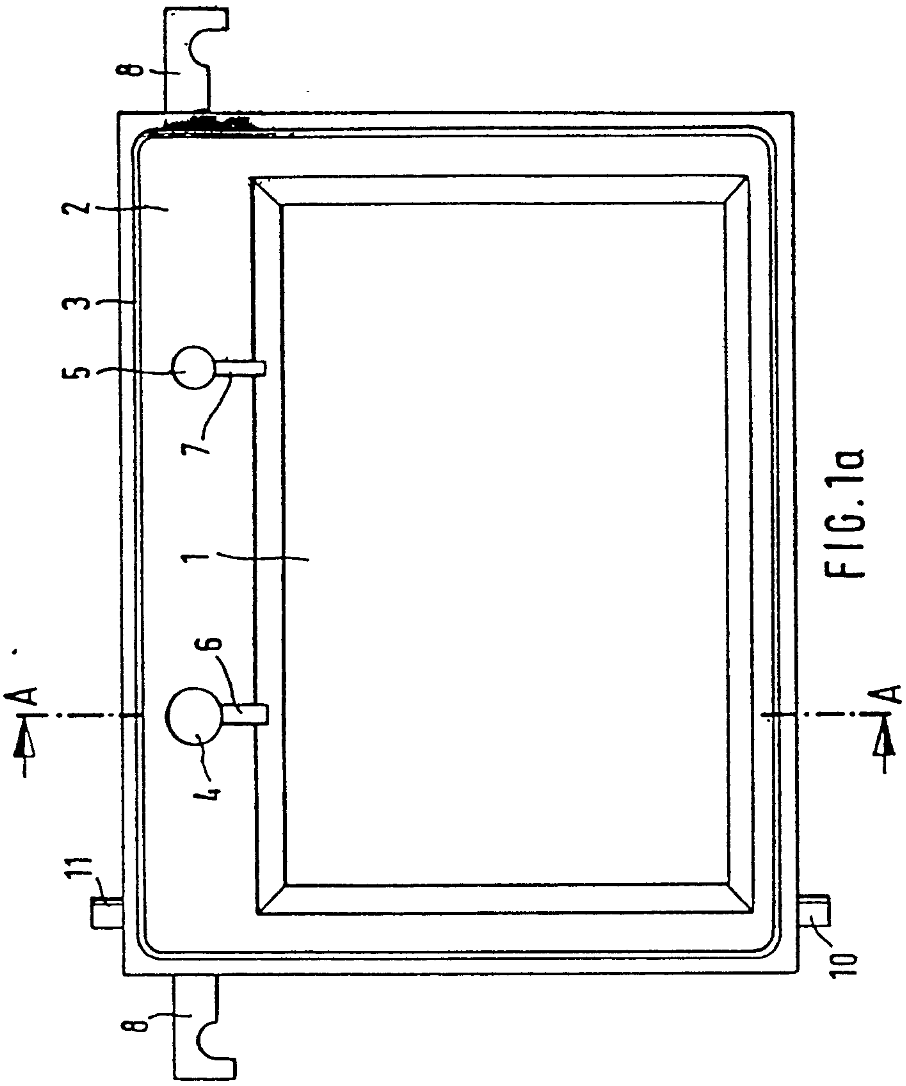


FIG. 1a

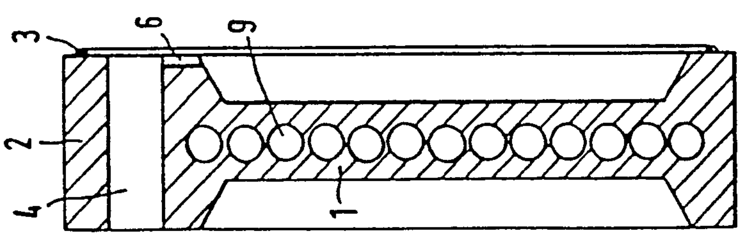


FIG. 1b

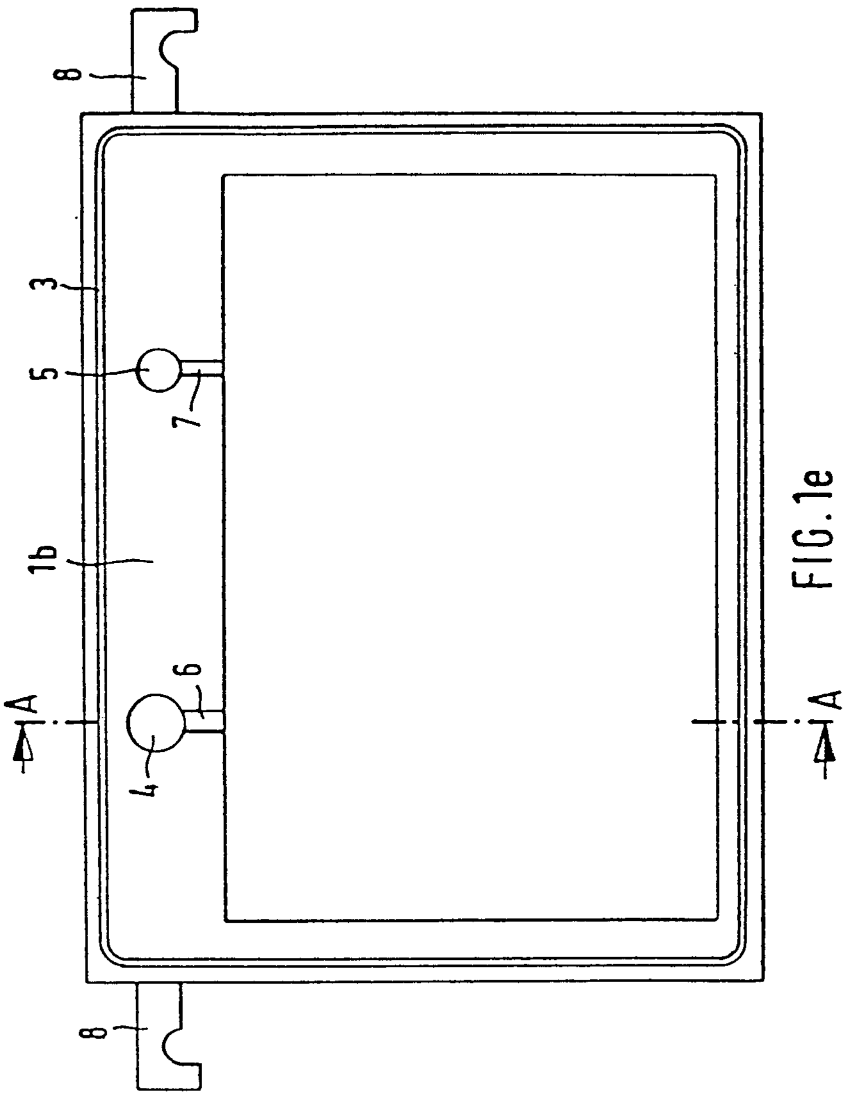


FIG.1e

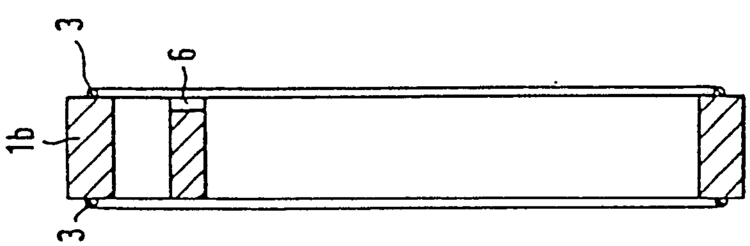


FIG.1f

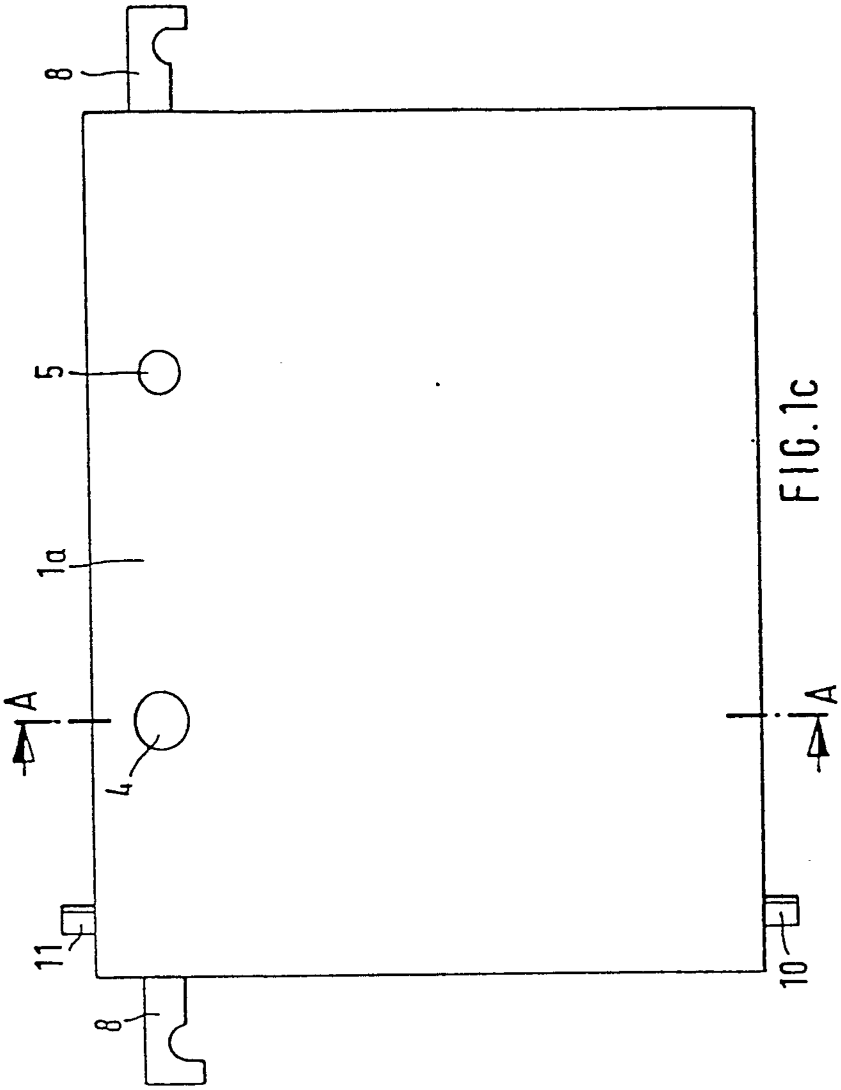


FIG. 1c

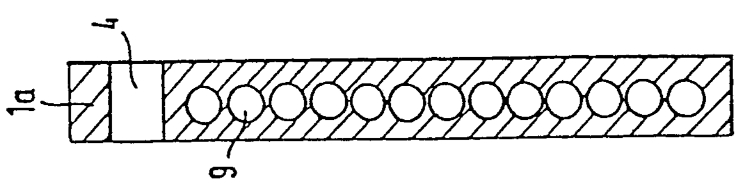


FIG. 1d

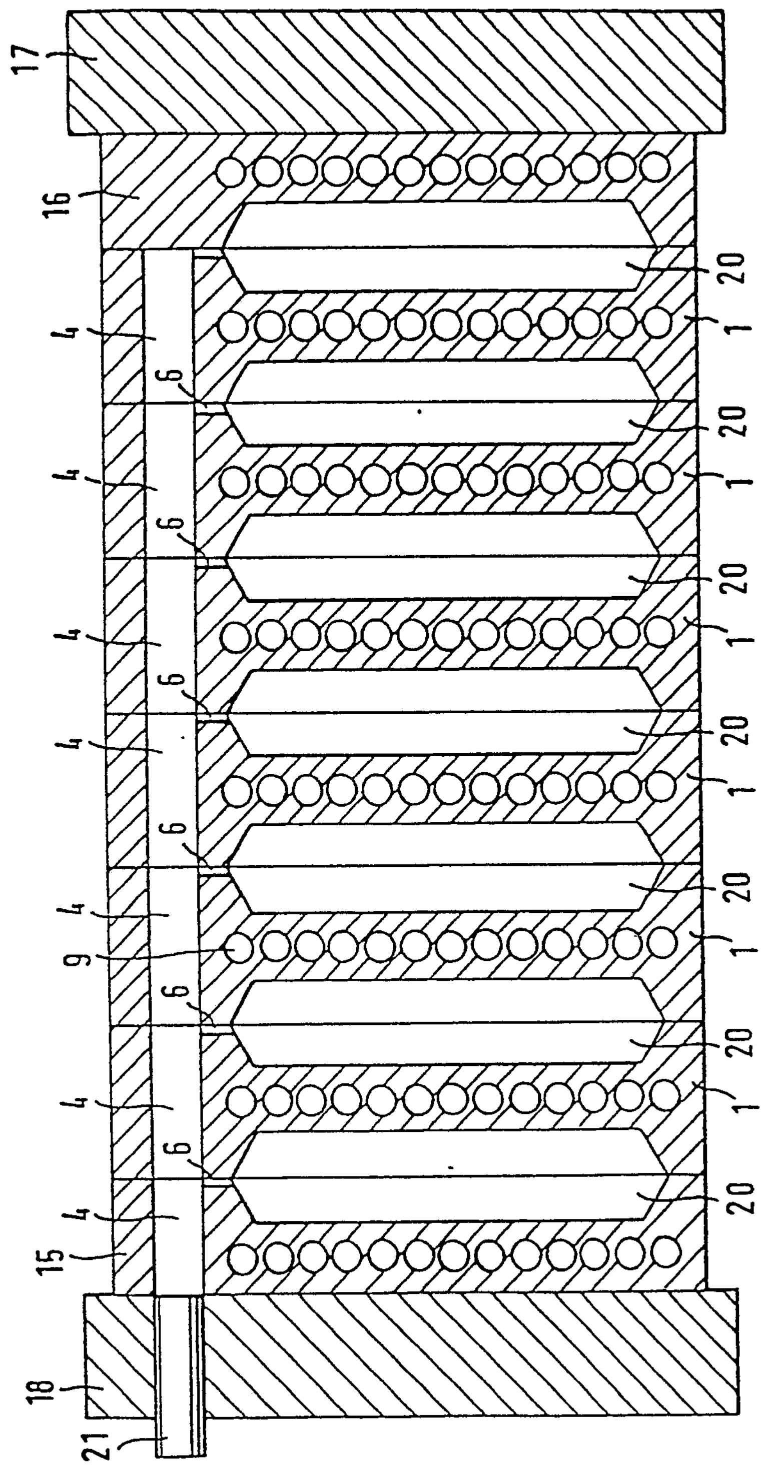


FIG. 2

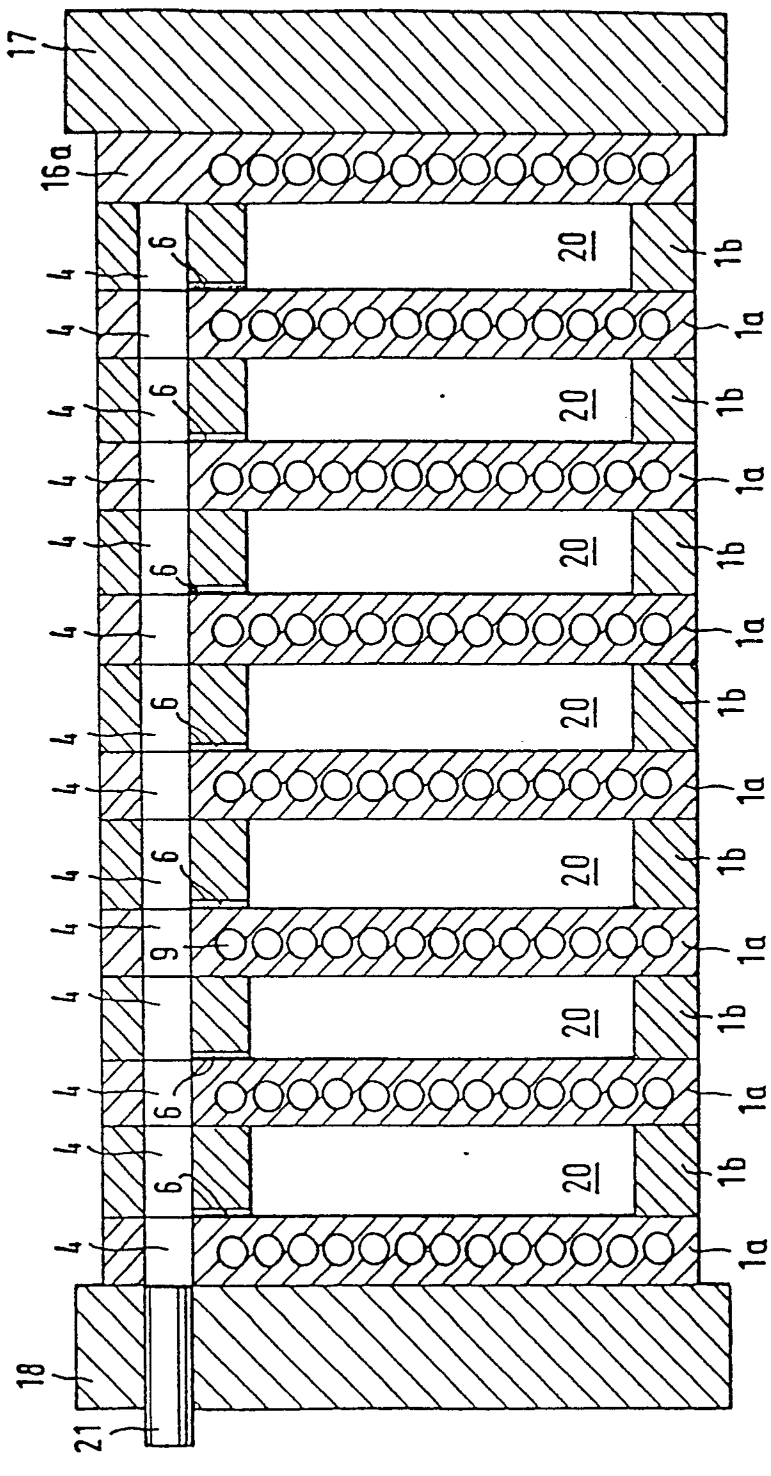


FIG. 2a

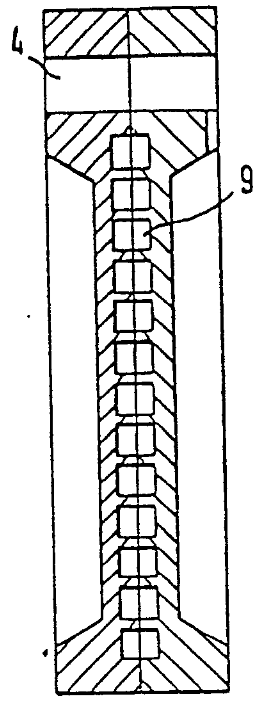


FIG.3

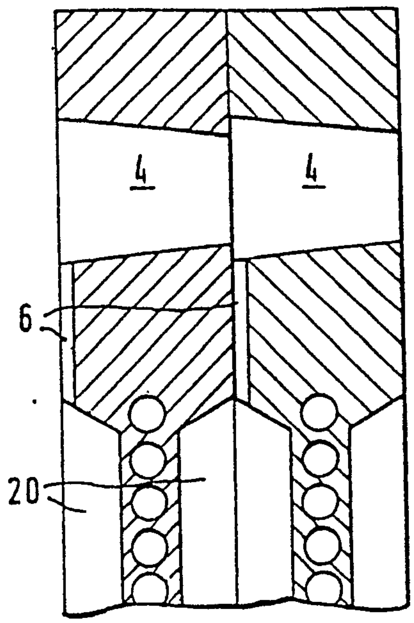


FIG.4a

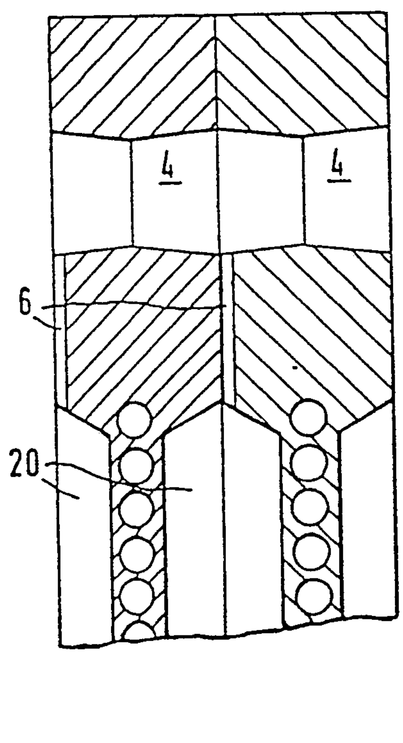


FIG.4b

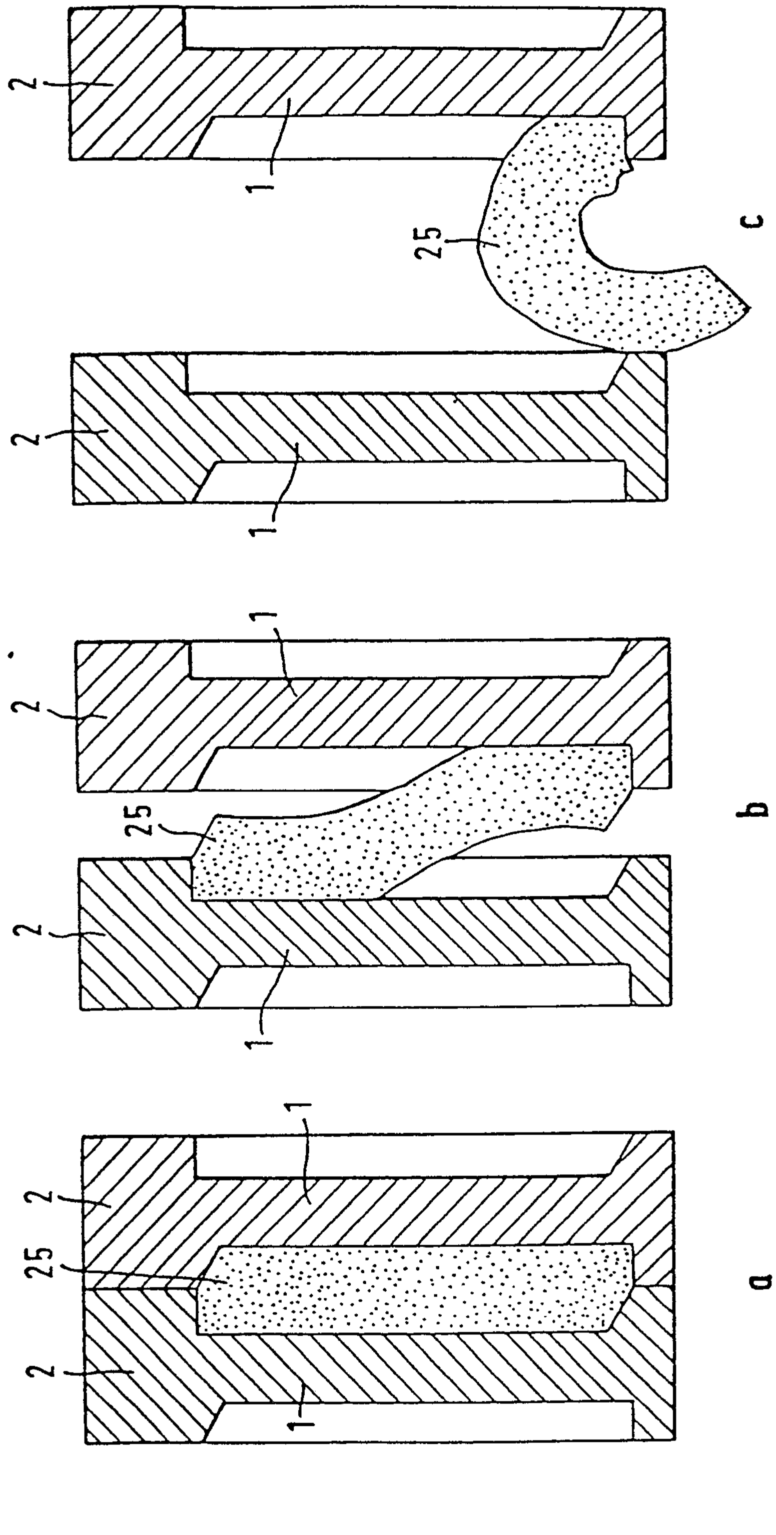


FIG. 5

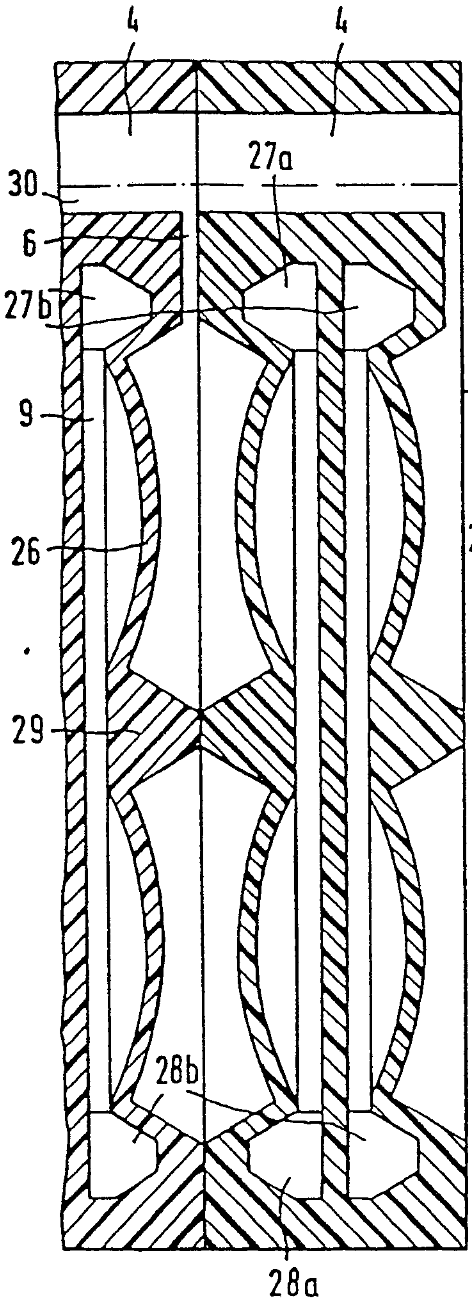


FIG.6a

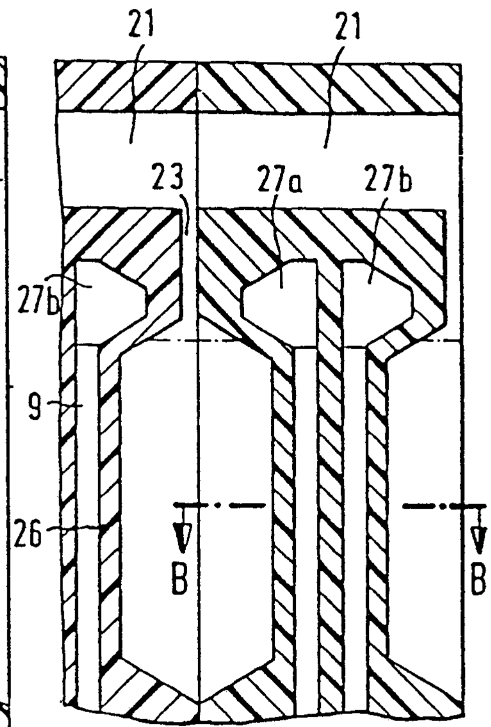


FIG.6b

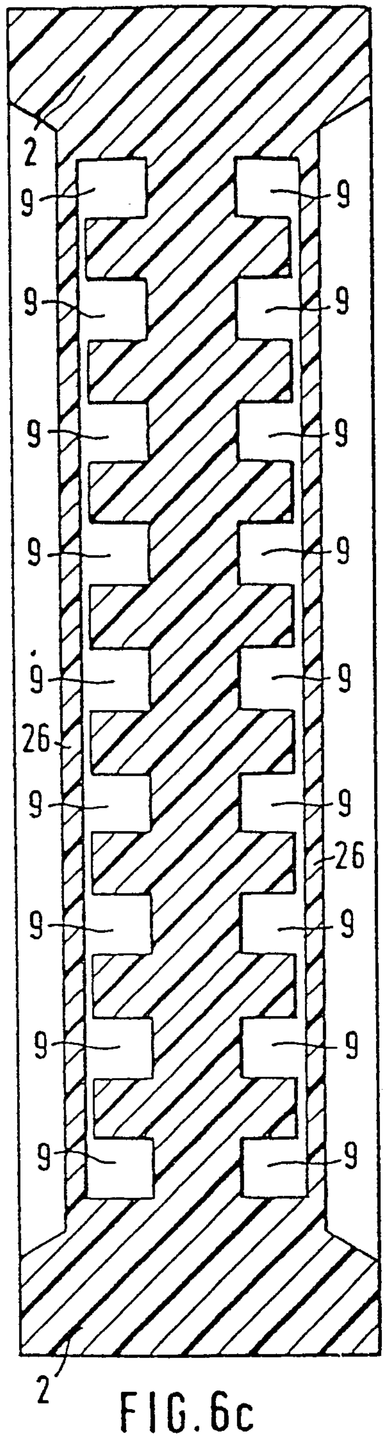


FIG.6c

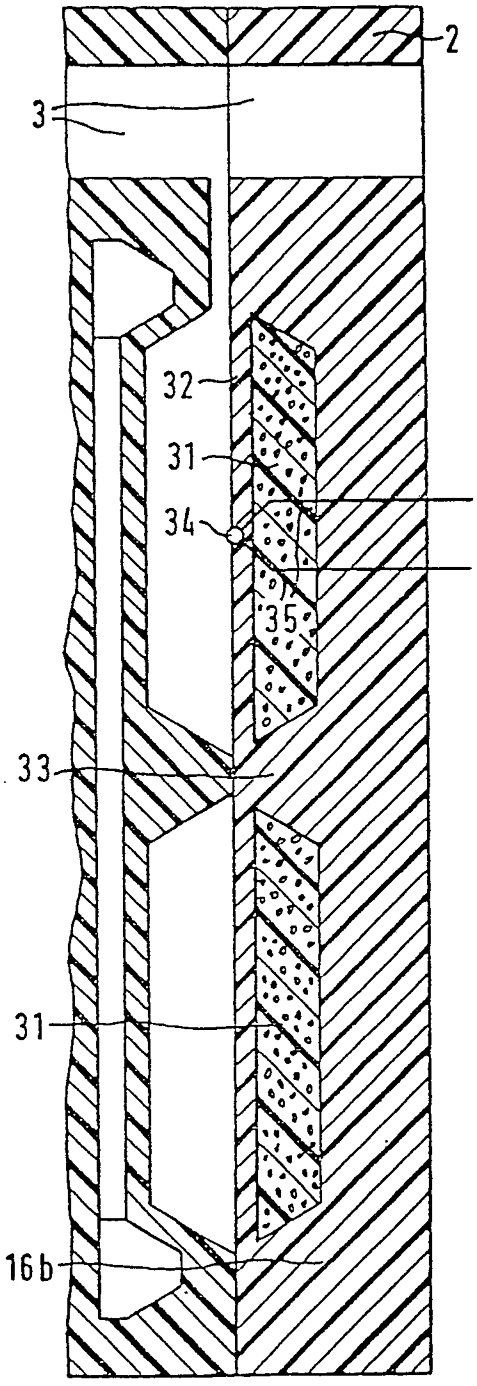


FIG.7

FIG. 8

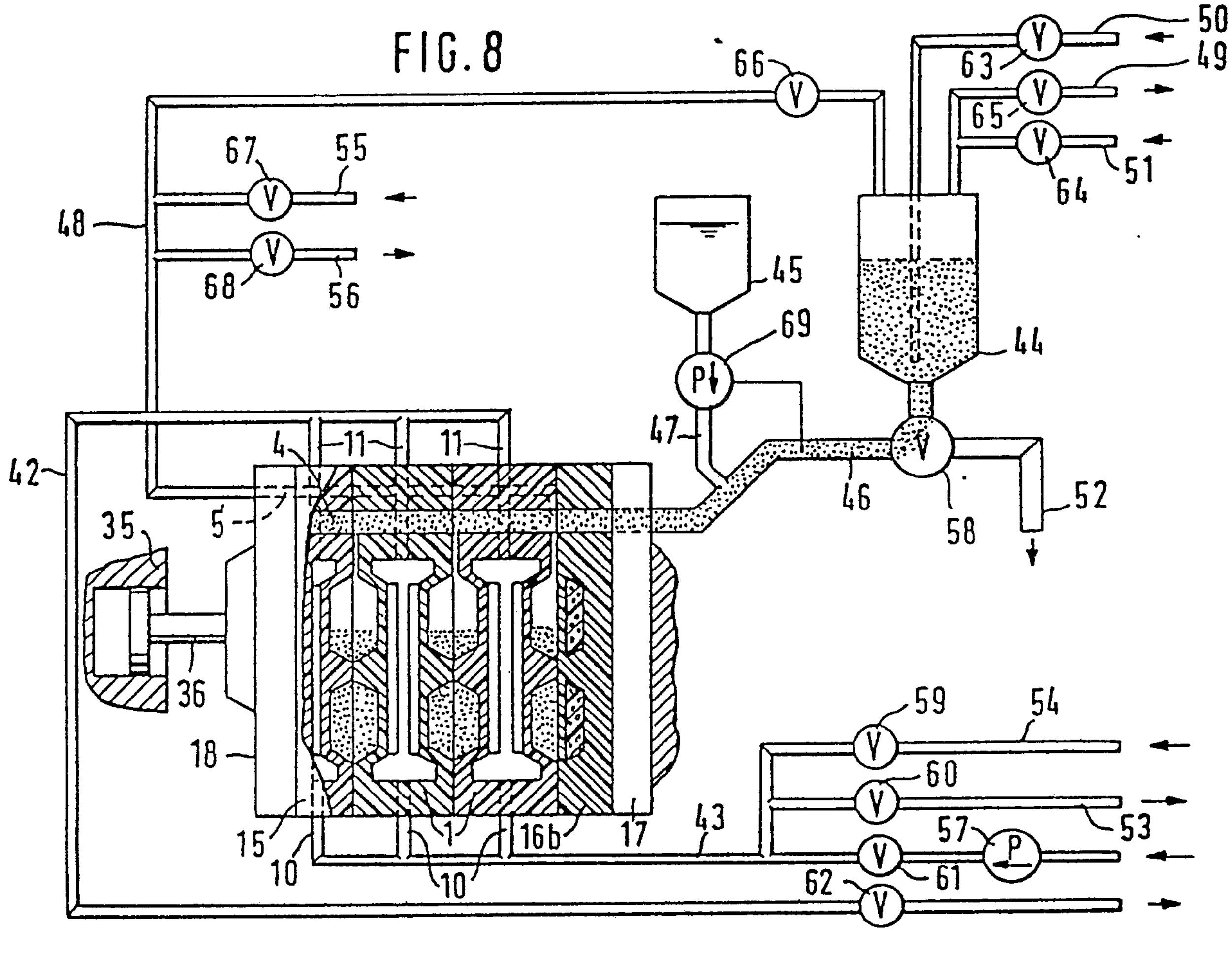
66
V
63
V
50
49
65
V
64
V
51
67
55
V
48
V
68
56
45
69
P
44
47
V
46
58
52
42
4
11
11
5
35
36
18
59
54
V
60
V
57
P
53
V
61
62
V
15
10
10
1
16b
17
43